# EUROPÄISCHE PATENTSCHRIFT

(11) **EP 3 350 478 B1**
(45) Veröffentlichungstag und Bekanntmachung des Hinweises auf die Patenterteilung: **25.09.2019**
(21) Anmeldenummer: 16760008.9
(22) Anmeldetag: 24.08.2016
(51) Int. Cl.: F16H 1/46, F16H 57/04

(54) **MEHRSTUFIGES PLANETENGETRIEBE FÜR EINE WINDKRAFTANLAGE MIT SPEZIELLER SCHMIERÖLFÜHRUNG**
MULTI-STAGE PLANETARY GEAR MECHANISM FOR A WIND TURBINE, COMPRISING A SPECIAL LUBRICANT GUIDE
BOÎTE PLANÉTAIRE À ÉTAGES MULTIPLES CONÇUE POUR UNE ÉOLIENNE ET COMPORTANT UNE STRUCTURE DE GUIDAGE D'HUILE LUBRIFIANTE SPÉCIFIQUE

(30) Priorität: 18.09.2015 DE 102015217906
(43) Veröffentlichungstag der Anmeldung: 25.07.2018
(73) Patentinhaber: ZF Friedrichshafen AG, 88046 Friedrichshafen (DE)
(72) Erfinder: HEPERMANN, Paul Philip, 58456 Witten (DE)
(86) Internationale Anmeldenummer: PCT/EP2016/069937
(87) Internationale Veröffentlichungsnummer: WO 2017/045883

(56) Entgegenhaltungen:
- EP-A1- 2 594 789
- EP-A2- 2 199 607
- DE-A1-102009 031 320
- DE-A1-102013 217 950

## Beschreibung

Die vorliegende Erfindung betrifft ein mehrstufiges Planetengetriebe für eine Windkraftanlage, umfassend eine in einem gemeinsamen Getriebegehäuse untergebrachte eingangsseitige erste Planetenstufe, in der über eine Steckverzahnung einer Sonnenwelle der ersten Planetenstufe mindestens eine zweite Planetenstufe nachgeschaltet ist, wobei ausgehend von einem im Getriebegehäuse ausgebildeten ortsfesten Ölzuführungskanal ein erster hierüber beaufschlagter Ölführungskanal zur Ölversorgung der Planetenradlager der ersten Planetenstufe, ein zweiter hierüber beaufschlagter Ölführungskanal zur Ölversorgung der Planetenradlager der zweiten Planetenstufe sowie ein dritter hierüber beaufschlagter Ölführungskanal zur Ölversorgung der Steckverzahnung vorgesehen sind.

Das Einsatzgebiet der Erfindung erstreckt sich vornehmlich auf Windkraftanlagen. Hierbei kommen mehrstufige Planetengetriebe der hier interessierenden Art zur Übersetzung der Drehbewegung eines windbeaufschlagten Rotors ins Schnelle zum Antrieb eines Generators zur Erzeugung elektrischer Energie zum Einsatz. Da derartige Planetengetriebe höherer Leistung während des Betriebs hohen Beanspruchungen ausgesetzt sind, ist auf eine hinreichend zuverlässige Ölversorgung der getriebeinternen Lagerstellen zu achten. Sind mehrere Getriebestufen über eine Steckverzahnung miteinander gekoppelt, so ist auch der Bereich der Steckverzahnung ausreichend zu schmieren und mit Öl zu durchspülen, um Verschleißpartikel aus dem Bereich der Steckverzahnung zuverlässig zu entfernen.

### Stand der Technik

Aus der EP 2 280 193 A2 geht ein mehrstufiges Planetengetriebe für industrielle Anwendungen hervor, bei welchem eine eingangsseitig erste Planetenstufe über eine Steckverzahnung an eine nachfolgende zweite Planetenstufe angekoppelt ist. Die Steckverzahnung wird über eine endseitige Außenverzahnung an der Sonnenwelle der ersten Planetenstufe gebildet, welche mit einer hierzu korrespondierenden Innenverzahnung in eine Aufnahmehülse des Planetenträgers in Eingriff kommt. Der zweiten Planetenstufe ist eine getriebeausgangsseitige Stirnradstufe nachgeschaltet, welche ebenfalls über eine Steckverzahnung angekoppelt ist.

Zur Schmierölversorgung der getriebeinternen Lagerstellen sowie auch der Steckverzahnungen besteht ein weit verzweigtes Netz von teilweise miteinander verbundenen getriebeinternen Ölführungskanälen, welche in den Planetenträgern, den Anschlusswellen sowie an ortsfesten Gehäuseanbauteilen mit dazwischen liegenden Drehdurchführungen realisiert sind. Beispielsweise ist der Bereich der Steckverzahnung zwischen der zweiten Planetenstufe und der getriebeausgangsseitigen Stirnradstufe über ein durch eine Eingangswelle der Stirnradstufe axial hindurchgeführten Ölzuführungskanal, einen sich hieran anschließenden Rohrkompensator an den Schmierstoffzuführungskanalabschnitt im Bereich der Aufnahmehülse der Steckverzahnung geführt. Endseitig erfolgt die Schmierölversorgung über eine Düse, welche Schmieröl in Schrägrichtung zur Steckverzahnung spritzt. Eine Durchspülung des Steckverzahnungsbereiches mit hoher Durchflussrate an Schmieröl kann mit dieser Lösung nicht erzielt werden. Ferner erfordert das weit verzweigte Netz der getriebeinternen Ölführungskanäle einen hohen fertigungstechnischen Aufwand.

Die EP 2 199 607 A2 offenbart ein gattungsgemäßes mehrstufiges Planetengetriebe, das gegenüber dem vorstehend diskutierten Stand der Technik mit weniger und kürzeren Ölführungskanälen zur Ölversorgung der Planetenradlager beider Planetenstufen sowie der dazwischenliegenden Steckverzahnung auskommt. Hierfür ist ein ortsfest im Getriebegehäuse ausgebildeter Ölzuführungskanal vorgesehen, der über mehrere durch eine der Seitenwangen des Planetenträgers hindurchgeführte Ölführungskanäle mit durch den Achsen aller Planetenräder hindurchgeführten Ö|führungskanälen in Verbindung steht, welche zu den Planetenradlagern hin offen sind. Hierbei durchdringt der ortsfeste Ölzuführungskanal einen hieran befestigten im Querschnitt L-förmigen Einsatzring, an dessen Radialschenkel eine obere Drehdurchführung zum sich relativ hierzu drehenden Planetenträger der ersten Planetenstufe gebildet ist. An der Unterseite des radialen Abschnitts ist eine weiter Drehdurchführung zum Planetenträger der zweiten Planetenstufe hin gebildet. Diese mündet in einen weiteren Ölführungskanal seitens des Planetenträgers der zweiten Planetenstufe ein, welcher schließlich im Bereich der Planetenradlager der zweiten Planetenstufe ausmündet, um diese zu schmieren. Die Steckverzahnung zwischen den beiden Planetenstufen wird dagegen über einen sich in Radialrichtung erstreckenden Sprühkopf realisiert, welcher einen waagerechten Abschnitt des Einsatzrings angebracht ist. Auch mit dieser technischen Lösung kann keine wirksame Durchspülung des Bereichs der Steckverzahnung erzielt werden.

Es ist die Aufgabe der vorliegenden Erfindung ein gattungsgemäßes mehrstufiges Planetengetriebe hinsichtlich seiner getriebeinternen Ölversorgung dahingehend weiter zu verbessern, dass unter Verwendung weniger Bauteile und mit geringem fertigungstechnischen Aufwand eine wirksame Druckölschmierung zum Durchspülen der Steckverzahnung neben der Ölversorgung der Planetenradlager möglich ist.

### Offenbarung der Erfindung

Die Erfindung schließt die technische Lehre ein, dass zur Ölversorgung der Steckverzahnung ein Ölführungskanal in Radialrichtung von dem zumindest teilweise durch Planetenträger der zweiten Planetenstufe in Axialrichtung hindurch verlaufenden und demgegenüber längeren Ölführungskanal zur Ölversorgung der Planetenradlager der zweiten Planetenstufe abzweigt, um im Bereich, vorzugsweise dem distalen Endbereich, der Steckverzahnung auszumünden.

Der Vorteil der erfindungsgemäßen Lösung liegt insbesondere darin, dass durch den Verzicht auf eine Düse oder Sprühkopf zur Ölversorgung der Steckverzahnung eine echte Durchspülung und damit eine wirksame Entfernung von Verschleißpartikeln erreicht wird. Hierfür ist das System der Ölführungskanäle so ausgerichtet, dass lediglich eine kurze Abzweigung eines Ölführungskanals in Radialrichtung zum Endbereich der Steckverzahnung hin genügt, um ein Teil des Schmieröls unter Druck an den Bereich der Steckverzahnung zu bringen. Vom distalen Endbereich her durchströmt das Schmieröl die Steckverzahnung und mündet an der gegenüberliegenden Seite der Steckverzahnung aus, um in den Ölkreislauf zurück zu gelangen.

Gemäß einer bevorzugten Ausführungsform des mehrstufigen Planetengetriebes steht die endseitig außenverzahnte Sonnenwelle der ersten Planetenstufe über die Steckverzahnung mit einem innenverzahnten Aufnahmehülsenabschnitt des Planetenträgers der zweiten Planetenstufe in Eingriff. Hierbei zweigt der zweite Ölführungskanal vorzugsweise zunächst in Radialrichtung vom ortsfesten Ölzuführungskanal ab und verläuft anschließend in Axialrichtung durch den innenverzahnten Aufnahmehülsenabschnitt des Planetenträgers der zweiten Planetenstufe hindurch. Hiervon zweigt der erfindungsgegenständliche dritte Ölführungskanal in Radialrichtung zum distalen Endbereich der Steckverzahnung hin ab.

Gemäß einer bevorzugten Ausführungsform geht der zweite Ölführungskanal seitens der zweiten Planetenstufe versetzt zum dritten Ölführungskanal in einen ebenfalls radialen Kanalabschnitt zur Ölversorgung der dortigen Planetenlager über. Alternativ hierzu ist es jedoch auch möglich, dass dieser radiale Kanalabschnitt in Richtung der zweiten Planetenstufe auch fluchtend mit dem radialen dritten Ölführungskanal verläuft, welcher zur Druckölschmierung der Steckverzahnung dient. In diesem Falle genügt eine einzige radiale Durchgangsbohrung durch den Planetenträger.

Gemäß einer weiteren die Erfindung verbessernden Maßnahme wird vorgeschlagen, dass zur Ölversorgung der Planetenradlager der ersten Planetenstufe der hierfür vorgesehene erste Ölführungskanal von ortsfesten Ölzuführungskanal in Axialrichtung abzweigt und durch den Planetenträger der ersten Planetenstufe verlässt, um die dortigen Planetenradlager mit Öl zu versorgen. Hierüber kann eine gemeinsame und kurzbauende Ölversorgung auch der ersten Planetenstufe erzielt werden.

Gemäß eines anderen Aspekts der Erfindung wird vorgeschlagen, dass die Abzweigung des ersten und zweiten Ölführungskanals vom ortsfesten Ölzuführungskanal über einen als Bestandteil der Drehdurchführung dienenden Ölverteilerring gebildet ist, der endseitig des ortsfesten Ölführungskanals angeordnet ist und vorzugsweise im Endbereich eines sich nach getriebeinnen erstreckenden Gehäuseabschnitts befestigt ist. Es sei darauf hingewiesen, dass diese spezielle Drehdurchführung über den Ölverteilerring auch unabhängig von der vorstehend erläuterten speziellen Ölversorgung der Steckverzahnung mittels des dritten Ölführungskanals bei dem gattungsgemäßen mehrstufigen Planetengetriebe ausgeführt sein kann.

Vorzugsweise weist der spezielle Ölverteilerring einen im Wesentlichen rechteckigen Außenquerschnitt mit einem innenliegenden T-förmigen Kanalquerschnitt auf, um die Abzweigungen des ersten und zweiten Ölführungskanals in Axial- bzw. Radialrichtung zu realisieren. Durch die einfache geometrische Form ist dieser spezielle Ölverteilerring, der vorzugsweise aus einem Bronzematerial besteht, einfach herzustellen. Gleichzeitig bildet der spezielle Ölverteilerring auch zwei Drehdurchführungen, nämlich in Axialrichtung zum ersten Ölführungskanal hin sowie in Radialrichtung zum zweiten Ölführungskanal hin. Der funktionsintegrierte Ölverteilerring beansprucht wenig Bauraum innerhalb des Planetengetriebes.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
- Figur 1: eine schematische Seitenansicht eines mehrstufigen Planetengetriebes für eine Windkraftanlage mit den Anschlussbaugruppen, und
- Figur 2: eine detaillierte Schnittdarstellung im Detail A aus Figur 1 zur Veranschaulichung der Ölführungskanalstruktur.

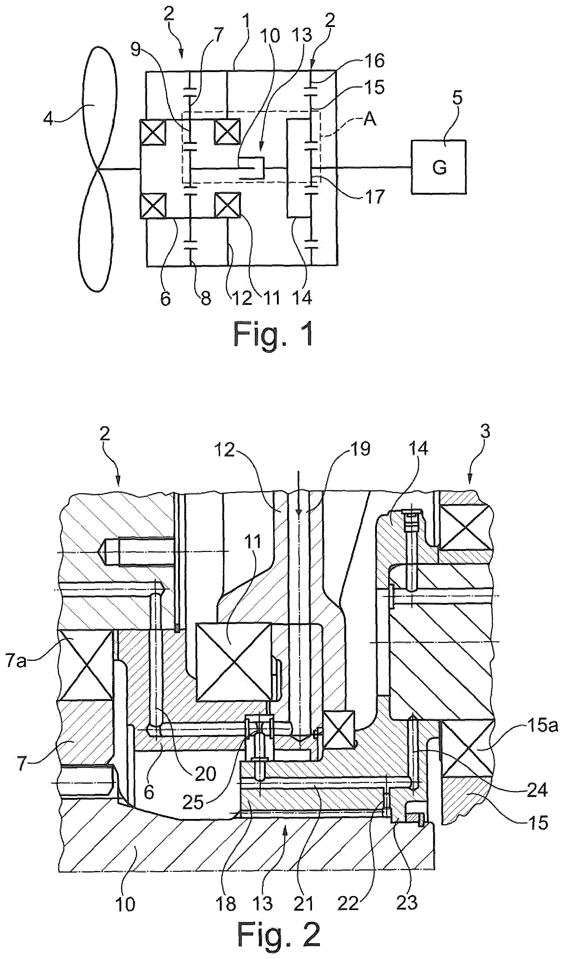

Nach Figur 1 besteht ein mehrstufiges Planetengetriebe für eine Windkraftanlage im Wesentlichen aus einer in einem Getriebegehäuse 1 untergebrachten eingangsseitigen ersten Planetenstufe 2 sowie einer dieser nachgeschalteten zweiten Planetenstufe 3. Das mehrstufige Planetengetriebe ist eingangsseitig an einen windbeaufschlagten Rotor 4 angeschlossen. Der Getriebeausgang des Planetengetriebes ist an einen Generator 5 zur Erzeugung von elektrischer Energie angeschlossen. Die erste Planetenstufe 2 weist einen Planetenträger 6 auf, der auf der Antriebsseite mit dem windbeaufschlagten Rotor 4 verbunden ist. Planetenräder 7 (exemplarisch) sind über - nicht weiter dargestellte - Wälzlager drehbar am Planetenträger 6 gelagert und stehen mit einem ortsfest zum Getriebegehäuse 1 angeordneten Hohlrad 8 in Zahneingriff. Die Planetenräder 7 stehen außerdem mit einem zentralen Sonnenrad 9 in Zahneingriff, von wo aus sich ausgangsseitig der ersten Planetenstufe 2 eine Sonnenradwelle 10 erstreckt. Der Planetenträger 6 ist u. a. über ein Wälzlager 11 gegenüber dem ortsfesten Getriebegehäuse 1 über einen sich nach radial innen erstreckenden Gehäuseabschnitt 12 gelagert. In dieser schematischen Figur sind nicht alle getriebeinternen Wälzlager zeichnerisch dargestellt.

Über eine Steckverzahnung 13 ist die erste Planetenstufe 2 an der zweiten Planetenstufe 3 angekoppelt. Die Ankopplung erfolgt über einen Planetenträger 14 der zweiten Planetenstufe 3, dessen Planetenräder 15 (exemplarisch) sowohl mit einem gehäusefesten Hohlrad 16 als auch mit einem zentralen Sonnenrad 17 kämmen, woran bei diesem Ausführungsbeispiel der Generator 5 zur Erzeugung von elektrischer Energie angeschlossen ist.

Gemäß Figur 2, welche in etwa den Bereich des Detail A aus Figur 1 illustriert, ist die Steckverzahnung 13 zwischen der ersten Planetenstufe 2 und der zweiten Planetenstufe 3 gebildet aus der endseitig außenverzahnten Sonnenradwelle 10 der ersten Planetenstufe 2, welche mit einem innenverzahnten Aufnahmehülsenabschnitt 18 seitens des Planetenträgers 14 der zweiten Planetenstufe 3 in Eingriff steht.

Durch den Gehäusesteg 12 des - hier nicht weiter dargestellten - Getriebegehäuse 1 verläuft ein von außen her mit Drucköl beaufschlagter Ölzuführungskanal 19. Vom Olzuführungskanal 19 zweigt ein erster Ölführungskanal 20 zur Ölversorgung der Planetenradlager 7a der ersten Planetenstufe 2 ab. Außerdem zweigt vom Ölzuführungskanal 19 ein zweiter Ölführungskanal 21 zur Ölversorgung der Planetenradlager 15a der zweiten Planetenstufe 3 ab. Zur Ölversorgung der Steckverzahnung 13 ist weiterhin ein kurzer, dritter Ölführungskanal 22 vorgesehen, der in Radialrichtung von dem durch den Aufnahmehülsenabschnitt 18 des Planetenträgers 14 in Axialrichtung hindurch verlaufenden zweiten Ölführungskanal 21 abzweigt. Der dritte Ölführungskanal 22 mündet endseitig in eine um den distalen Endbereich der Sonnenrandwelle 10 herum verlaufende Ringkammer neben einem axialen Anschlag 23 ein, der an dem Planetenträger 14 angeformt ist. Somit wird das vom Ölzuführungskanal 19 in das Planetengetriebe eingebrachte Schmieröl über den zweiten Ölführungskanal 18 und den hiervon abzweigenden dritten Ölführungskanal 22 in die Ringkammer eingeleitet, von wo aus die Steckverzahnung 13 axial durchspült und von Verschleißpartikeln befreit wird.

Vom ortsfesten Ölzuführungskanal 19 aus zweigt der zweite Ölführungskanal 21 in Radialrichtung ab und erstreckt sich anschließend in Axialrichtung entlang des innenverzahnten Aufnahmehülsenabschnitts 18 des Planetenträgers 14 der zweiten Planetenstufe 3. Seitens der zweiten Planetenstufe 3 geht der zweite Ölführungskanal 21 in einen radialen Kanalabschnitt 24 zur Ölversorgung der dortigen Planetenradlager 15a über. Der radiale Kanalabschnitt 24 des zweiten Ölführungskanals 21 ist bei diesem Ausführungsbeispiel in Axialrichtung versetzt gegenüber dem radialen dritten Ölführungskanal 22 angeordnet.

Der erste Ölführungskanal 20 ist ebenfalls vom ortsfesten Ölzuführungskanal 19 abgezweigt und durch den Planetenträger 6 der ersten Planetenstufe 2 hindurch in Richtung der dortigen Planetenradlager 7a geführt, um diese mit Öl zu versorgen.

Die Abzweigung des ersten und zweiten Ölführungskanals 20 und 21 vom ortsfesten Ölzuführungskanal 19 ist über einen als Bestandteil einer Drehdurchführung dienenden Ölverteilerring 25 gebildet, der endseitig des ortsfesten Ölzuführungskanals 19 am Gehäusesteg 12 angebracht ist.

Der Ölverteilerring 25 besitzt eine rechteckigen Außenquerschnitt und ist mit einem innenliegenden T-förmigen Kanalquerschnitt versehen, um die Abzweigungen zum ersten und zweiten Ölführungskanal 20 und 21 in Axial- bzw. Radialrichtung zu realisieren.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, den dritten Ölführungskanal 22 fluchtend mit dem radialen Kanalabschnitt 24 des zweiten Ölführungskanals 21 auszubilden. Je nach herrschenden Platzverhältnissen kann eine der hier beschriebenen technischen Alternativen genutzt werden. Ferner können die hier beschriebenen Ölführungskanäle auch weitere Abzweigungen oder bedüste Austrittsöffnungen aufweisen, um eventuell andere Getriebebauteile ebenfalls mit Schmieröl zu versorgen.

### Bezugszeichenliste

- 1: Getriebegehäuse
- 2: erste Planetenstufe
- 3: zweite Planetenstufe
- 4: Rotor
- 5: Generator
- 6: Planetenträger
- 7: Planetenrad
- 8: Hohlrad
- 9: Sonnenrad
- 10: Sonnenradwelle
- 11: Wälzlager
- 12: Gehäusesteg
- 13: Steckverzahnung
- 14: Planetenträger
- 15: Planetenrad
- 16: Hohlrad
- 17: Sonnenrad
- 18: Aufnahmehülsenabschnitt
- 19: Ölzuführungskanal
- 20: erster Öfführungskanal
- 21: zweiter Ölführungskanal
- 22: dritter Ölführungskanal
- 23: axialer Anschlag
- 24: radialer Kanalabschnitt
- 25: Ölverteilerring

## Patentansprüche

1. Mehrstufiges Planetengetriebe für eine Windkraftanlage, umfassend eine in einem gemeinsamen Getriebegehäuse (1) untergebrachte eingangsseitige erste Planetenstufe (2), der über eine Steckverzahnung (13) einer Sonnenradwelle (10) der ersten Planetenstufe (2) mindestens eine zweite Planetenstufe (3) nachgeschaltet ist, wobei ausgehend von einem im Getriebegehäuse (1) ortsfest ausgebildeten Ölzuführungskanal (19)
- ein erster hierüber beaufschlagter Ölführungskanal (20) zur Ölversorgung der Planetenradlager (7a) der ersten Planetenstufe (2),
- ein zweiter hierüber beaufschlagter Ölführungskanal (21) zur Ölversorgung der Planetenradlager (15a) der zweiten Planetenstufe (3) sowie
- ein dritter hierüber beaufschlagter Ölführungskanal (22) zur Ölversorgung der Steckverzahnung (13) vorgesehen sind,
**dadurch gekennzeichnet, dass** zur Ölversorgung der Steckverzahnung (13) der dritte Ölführungskanal (22) in Radialrichtung von dem zumindest teilweise durch den Planetenträger (14) der zweiten Planetenstufe (3) in Axialrichtung hindurch verlaufenden und dem gegenüber längeren zweiten Ölführungskanal (21) abzweigt, um im Bereich der Steckverzahnung (13) auszumünden.

2. Mehrstufiges Planetengetriebe nach Anspruch 1,
**dadurch gekennzeichnet, dass** die endseitig außenverzahnte Sonnenradwelle (10) der ersten Planetenstufe (2) über die Steckverzahnung (13) mit einem innenverzahnten Aufnahmehülsenabschnitt (18) des Planetenträgers (14) der zweiten Planetenstufe (3) in Eingriff steht.

3. Mehrstufiges Planetengetriebe nach Anspruch 2,
**dadurch gekennzeichnet, dass** der zweite Ölführungskanal (21) in Radialrichtung vom ortsfesten Ölzuführungskanal (19) abzweigt und in Axialrichtung durch den innenverzahnten Aufnahmehülsenabschnitt (18) des Planetenträgers (14) der zweiten Planetenstufe (3) verläuft.

4. Mehrstufiges Planetengetriebe nach Anspruch 3,
**dadurch gekennzeichnet, dass** der zweite Ölführungskanal (21) seitens der zweiten Planetenstufe (3) in einen radialen Kanalabschnitt (24) zur Ölversorgung der dortigen Planetenradlager (15a) übergeht.

5. Mehrstufiges Planetengetriebe nach Anspruch 4,
**dadurch gekennzeichnet, dass** der radiale Kanalabschnitt (24) des zweiten Ölführungskanals (21) in Axialrichtung versetzt gegenüber dem radialen dritten Ölführungskanal (22) angeordnet ist.

6. Mehrstufiges Planetengetriebe nach Anspruch 4,
**dadurch gekennzeichnet, dass** der radiale Kanalabschnitt (24) des zweiten Ölführungskanals (21) fluchtend mit dem radialen dritten Ölführungskanal (22) verläuft.

7. Mehrstufiges Planetengetriebe nach Anspruch 1,
**dadurch gekennzeichnet, dass** der erste Ölführungskanal (20) vom ortsfesten Ölzuführungskanal (19) in Axialrichtung abzweigt und durch den Planetenträger (6) der ersten Planetenstufe (2) verläuft, um die dortigen Planetenradlager (7a) mit Öl zu versorgen.

8. Mehrstufiges Planetengetriebe nach Anspruch 1,
**dadurch gekennzeichnet, dass** die Abzweigung des ersten und zweiten Ölführungskanals (20, 21) vom ortsfesten Ölzuführungskanal (19) über einen als Bestandteil einer Drehdurchführung dienenden Ölverteilerring (25) gebildet ist, der endseitig des ortsfesten Ölzuführungskanals (19) angeordnet ist.

9. Mehrstufiges Planetengetriebe nach Anspruch 8,
**dadurch gekennzeichnet, dass** der Ölverteilerring (25) einen im wesentlichen rechteckigen Außenquerschnitt mit einem innenliegenden T-förmigen Kanalquerschnitt aufweist, um die Abzweigungen des ersten und zweiten Ölführungskanals (20, 21) in Axial- bzw. Radialrichtung zu realisieren.

10. Mehrstufiges Planetengetriebe nach Anspruch 1,
**dadurch gekennzeichnet, dass** der dritte Ölführungskanal (22) in eine um den distalen Endbereich der Sonnenradwelle (10) herum verlaufende Ringkammer einmündet.

## Claims

1. Multi-step planetary transmission for a wind power plant, comprising an input-side first planetary stage (2) which is accommodated in a common transmission housing (1) and downstream of which at least one second planetary stage (3) is connected via a spline system (13) of a sun gear shaft (10) of the first planetary stage (2), the following being provided, starting from an oil feed duct (19) which is configured in a stationary manner in the transmission housing (1):
- a first oil-conveying duct (20) which is loaded via the said oil feed duct (19) for supplying the planetary gear bearings (7a) of the first planetary stage (2) with oil,
- a second oil-conveying duct (21) which is loaded via the said oil feed duct (19) for supplying the planetary gear bearings (15a) of the second planetary stage (3) with oil, and
- a third oil-conveying duct (22) which is loaded via the said oil feed duct (19) for supplying the spline system (13) with oil;
**characterized in that**, in order to supply the spline system (13) with oil, the third oil-conveying duct (22) branches off in the radial direction from the second oil-conveying duct (21) which runs at least partially through the planetary carrier (14) of the second planetary stage (3) in the axial direction and is longer than the latter, in order to open out in the region of the spline system (13) .

2. Multi-step planetary transmission according to Claim 1, **characterized in that** the sun gear shaft (10) of the first planetary stage (2), which sun gear shaft (10) is externally toothed on the end side, is in engagement via the spline system (13) with an internally toothed receiving sleeve section (18) of the planetary carrier (14) of the second planetary stage (3).

3. Multi-step planetary transmission according to Claim 2, **characterized in that** the second oil-conveying duct (21) branches off in the radial direction from the stationary oil feed duct (19) and runs in the axial direction through the internally toothed receiving sleeve section (18) of the planetary carrier (14) of the second planetary stage (3).

4. Multi-step planetary transmission according to Claim 3, **characterized in that** the second oil-conveying duct (21) merges on the side of the second planetary stage (3) into a radial duct section (24) for supplying the planetary gear bearings (15a) there with oil.

5. Multi-step planetary transmission according to Claim 4, **characterized in that** the radial duct section (24) of the second oil-conveying duct (21) is arranged offset in the axial direction with respect to the radial third oil-conveying duct (22).

6. Multi-step planetary transmission according to Claim 4, **characterized in that** the radial duct section (24) of the second oil-conveying duct (21) runs in an aligned manner with the radial third oil-conveying duct (22) .

7. Multi-step planetary transmission according to Claim 1, **characterized in that** the first oil-conveying duct (20) branches off in the axial direction from the stationary oil feed duct (19) and runs through the planetary carrier (6) of the first planetary stage (2), in order to supply the planetary gear bearings (7a) there with oil.

8. Multi-step planetary transmission according to Claim 1, **characterized in that** the branch of the first and second oil-conveying duct (20, 21) from the stationary oil feed duct (19) is formed via an oil distributor ring (25) which serves as a constituent part of a rotary leadthrough and is arranged on the end side of the stationary oil feed duct (19).

9. Multi-step planetary transmission according to Claim 8, **characterized in that** the oil distributor ring (25) has a substantially rectangular outer cross section with an inner T-shaped duct cross section, in order to realize the branches of the first and second oil-conveying ducts (20, 21) in the axial and radial direction.

10. Multi-step planetary transmission according to Claim 1, **characterized in that** the third oil-conveying duct (22) opens into an annular chamber which runs around the distal end region of the sun gear shaft (10).

## Revendications

1. Transmission planétaire multi-étagée pour une éolienne, comprenant un premier étage planétaire (2) du côté de l'entrée, monté dans un boîtier de transmission commun (1), en aval duquel est monté au moins un deuxième étage planétaire (3) par le biais d'une denture d'enfichage (13) d'un arbre de roue solaire (10) du premier étage planétaire (2), dans laquelle, à partir d'un canal d'alimentation en huile (19) réalisé fixement dans le boîtier de transmission (1),
- un premier canal de guidage d'huile (20) sollicité par le biais de celui-ci pour l'alimentation en huile du palier de satellite (7a) du premier étage planétaire (2),
- un deuxième canal de guidage d'huile (21) sollicité par le biais de celui-ci pour l'alimentation en huile du palier de satellite (15a) du deuxième étage planétaire (3) ainsi
- qu'un troisième canal de guidage d'huile (22) sollicité par le biais de celui-ci pour l'alimentation en huile de la denture d'enfichage (13), sont prévus,
**caractérisée en ce que** pour l'alimentation en huile de la denture d'enfichage (13), le troisième canal de guidage d'huile (22) bifurque dans la direction radiale depuis le deuxième canal de guidage d'huile (21) plus long par rapport à celui-ci et s'étendant au moins en partie dans la direction axiale à travers le porte-satellites (14) du deuxième étage planétaire (3), pour déboucher dans la région de la denture d'enfichage (13) .

2. Transmission planétaire multi-étagée selon la revendication 1, **caractérisée en ce que** l'arbre de roue solaire (10) du premier étage planétaire (2), pourvu d'une denture extérieure du côté de l'extrémité, est en prise par le biais de la denture d'enfichage (13) avec une portion de douille de réception (18), pourvue d'une denture intérieure, du porte-satellites (14) du deuxième étage planétaire (3).

3. Transmission planétaire multi-étagée selon la revendication 2, **caractérisée en ce que** le deuxième canal de guidage d'huile (21) bifurque dans la direction radiale depuis le canal d'alimentation en huile fixe (19) et s'étend dans la direction axiale à travers la portion de douille de réception (18), pourvue d'une denture intérieure, du porte-satellites (14) du deuxième étage planétaire (3).

4. Transmission planétaire multi-étagée selon la revendication 3, **caractérisée en ce que** le deuxième canal de guidage d'huile (21) se prolonge à partir du deuxième étage planétaire (3) par une portion de canal radiale (24) pour l'alimentation en huile du palier de satellite (15a) se trouvant à cet endroit.

5. Transmission planétaire multi-étagée selon la revendication 4, **caractérisée en ce que** la portion de canal radiale (24) du deuxième canal de guidage d'huile (21) est disposée dans la direction axiale de manière décalée par rapport au troisième canal de guidage d'huile radial (22).

6. Transmission planétaire multi-étagée selon la revendication 4, **caractérisée en ce que** la portion de canal radiale (24) du deuxième canal de guidage d'huile (21) s'étend en alignement avec le troisième canal de guidage d'huile radial (22).

7. Transmission planétaire multi-étagée selon la revendication 1, **caractérisée en ce que** le premier canal de guidage d'huile (20) bifurque dans la direction axiale depuis le canal d'alimentation en huile fixe (19) et s'étend à travers le porte-satellites (6) du premier étage planétaire (2), afin d'alimenter en huile le palier de satellite (7a) se trouvant à cet endroit.

8. Transmission planétaire multi-étagée selon la revendication 1, **caractérisée en ce que** la bifurcation du premier et du deuxième canal de guidage d'huile (20, 21) depuis le canal d'alimentation en huile fixe (19) est formée par le biais d'une bague de distribution d'huile (25) servant de constituant d'un passage tournant, qui est disposée du côté de l'extrémité du canal d'alimentation en huile fixe (19).

9. Transmission planétaire multi-étagée selon la revendication 8, **caractérisée en ce que** la bague de distribution d'huile (25) présente une section transversale extérieure essentiellement rectangulaire, avec une section transversale de canal en forme de T située à l'intérieur, afin de réaliser les branchements du premier et du deuxième canal de guidage d'huile (20, 21) dans la direction axiale, respectivement radiale.

10. Transmission planétaire multi-étagée selon la revendication 1, **caractérisée en ce que** le troisième canal de guidage d'huile (22) débouche dans une chambre annulaire s'étendant autour de la région d'extrémité distale de l'arbre de roue solaire (10).
